# EUROPÄISCHE PATENTSCHRIFT

(11) **EP 1 119 174 B1**
(45) Veröffentlichungstag und Bekanntmachung des Hinweises auf die Patenterteilung: **23.04.2003**
(21) Anmeldenummer: 01440004.8
(22) Anmeldetag: 10.01.2001
(51) Int. Cl.: H04M 15/00, H04Q 3/00

(54) **Verfahren, Vermittlungsstelle, Gebührenrechner, Gebührenabrechnungsrechner und Programm-Module zur Verarbeitung von Gebührendaten für Telekommunikations-Dienstleistungen**
Method, switch, mediation computer, billing computer and program-Module for the processing of telecommunication-services call charge data
Méthode, commutateur, ordinateur de médiation, ordinateur et module de programme pour la facuration des donnees de services de telecommunications

(30) Priorität: 12.01.2000 DE 10000825
(43) Veröffentlichungstag der Anmeldung: 25.07.2001
(73) Patentinhaber: ALCATEL, 75008 Paris (FR)
(72) Erfinder: Daase, Detlef, Dr., 12205 Berlin (DE); Müller, Irina, 12555 Berlin (DE); Geisbüsch, Feridinant, 71679 Asperg (DE); Althainz, Bettina, 10827 Berlin (DE)
(74) Vertreter: Rausch, Gabriele, Dr.

(56) Entgegenhaltungen:
- WO-A-97/26739
- US-A- 6 002 754

## Beschreibung

Die vorliegende Erfindung betrifft ein Verfahren gemäss dem Oberbegriff des Anspruchs 1, sowie eine Vermittlungsstelle gemäss dem Oberbegriff des Anspruchs 9 hierfür, einen Gebührenrechner gemäss dem Oberbegriff des Anspruchs 10 hierfür, einen Gebührenabrechnungsrechner gemäss dem Oberbegriff des Anspruchs 11 hierfür ein Programm-Modul für eine Vermittlungsstelle gemäß dem Oberbegriff des Anspruchs 13 hierfür, ein Programm-Modul für einen Gebührenrechner gemäß dem Oberbegriff des Anspruchs 14 hierfür und einen Gebührenabrechnungsrechner gemäß dem Oberbegriff des Anspruchs 15 hierfür.

In den bekannten Verfahren zur Gebührenabrechnung von Telekommunikationsdiensten senden Vermittlungsstellen eines Telekommunikationsnetzes Gebührennachrichten für Telekommunikationsdienste, die jeweils von durch die Vermittlungsstellen bediente Benutzer des Telekommunikationsnetzes genutzt worden sind, an einen Gebührenabrechnungsrechner. Dieser wird häufig auch als "Billing Center" (BC) oder "Customer Care and Billing Center" (CCBC) bezeichnet. Gebührennachrichten für Rufverbindungen werden insbesondere auch "Call Tickets" genannt. Die Vermittlungsstellen senden die Gebührennachrichten dabei in einem Format und einer Struktur, die auf den jeweils zu bedienenden Gebührenabrechnungsrechner angepasst sind. Dazu müssen die Vermittlungsstellen aufwendig an den jeweils zu bedienenden Gebührenabrechnungsrechner angepasst werden und brauchen geeignete Schnittstellenmodule. Ein Beispiel vom Stand der Technick ist aus US-A-6 002 754 bekannt.

In einer ersten Lösung für dieses Problem wird jeweils einer Vermittlungsstelle ein Gebührenrechner vorgeschaltet, der eine Umsetzung der Gebührenrohdaten aus einem in der Vermittlungsstelle gebräuchlichen Format in Gebührenabrechungsdaten vornimmt, die in einem für den Gebührenabrechnungsrechner verständlichen Format dargestellt sind. Dabei werden zusätzlich auch einige Daten aus den Gebührenrohdaten durch Gebührenrechner eliminiert, so dass der Übertragungsweg zu dem Gebührenabrechnungsrechner sowie der Gebührenabrechnungsrechner selbst möglichst wenig belastet werden. Ein solcher Gebührenrechner ist beispielsweise ein Server, der über ein LAN (Local Area Network) mit der Vermittlungsstelle verbunden ist. Zur Erhöhung der Ausfallsicherheit ist dabei zweckmäßigerweise der Server eine Doppelrechnereinheit, bei dem jeweils ein Teilrechner die Funktionen des jeweils anderen Teilrechners übernehmen kann. So zweckmäßig und in der Praxis bewährt ein solcher Gebührenrechner auch ist, so ist die notwendige Doppelrechnereinheit doch so kostenintensiv, dass kleinere Vermittlungsstellen nicht mit einem solchen separaten Gebührenrechner ausgestattet werden können, sondern auf die eingangs geschilderte aufwendige Weise Gebührennachrichten für den Gebührenabrechnungsrechner selbst erzeugen und versenden müssen.

Es ist daher Aufgabe der Erfindung, eine kostengünstige und effektive Verarbeitung für Gebührendaten für Vermittlungsstellen vorzusehen.

Diese Aufgabe wird durch ein Verfahren gemäss der technischen Lehre des Anspruchs 1, sowie eine Vermittlungsstelle gemäß der technischen Lehre des Anspruchs 9 hierfür, einen Gebührenrechner gemäß der technischen Lehre des Anspruchs 10 hierfür, einen Gebührenabrechnungsrechner gemäß der technischen Lehre des Anspruchs 11, ein Programm-Modul für eine Vermittlungsstelle gemäß der technischen Lehre des Anspruchs 13, ein Programm-Modul für einen Gebührenrechner gemäß der technischen Lehre des Anspruchs 14 und ein Programm-Modul für einen Gebührenabrechnungsrechner gemäß der technischen Lehre des Anspruchs 15 gelöst. Weitere vorteilhafte Ausgestaltungen der Erfindung sind den abhängigen Ansprüchen und der Beschreibung zu entnehmen. Kombinationen der in den Ansprüchen und in der Beschreibung genannten Lösungen sind ohne Weiteres möglich.

Der Erfindung liegt dabei der Gedanke zugrunde, dass einem Gebührenrechner, der Gebührenrohdaten zu von einem Gebührenabrechnungsrechner verarbeitbare Gebührenabrechungsdaten umwandelt und gegebenenfalls puffert, nicht nur eine Vermittlungsstelle, sondern auch zumindest eine zweite Vermittlungsstelle zugeordnet ist. Der Gebührenrechner verarbeitet von den jeweiligen Vermittlungsstellen empfangene Gebührenrohdaten und wandelt diese so um, dass diese als Gebührenabrechnungsdaten von einem nachgeschalteten Gebührenabrechnungsrechner interpretiert werden können. Durch Einfügen von Kennzeichnerfeldem oder durch Benutzung dedizierter Verbindungswege stellt der Gebührenrechner sicher, dass der Gebührenabrechnungsrechner die von dem Gebührenrechner empfangenen, jedoch von verschiedenen Vermittlungsstellen stammenden Gebührenabrechnungsdaten den jeweiligen Vermittlungsstellen zuordnen kann. Die aufwendige Verarbeitung der Gebührenrohdaten ist somit aus den jeweiligen Vermittlungsstellen heraus auf einen Gebührenrechner verlagert, wobei der Gebührenrechner für mehrere Vermittlungsstellen nutzbar ist und damit ein optimales Kosten-Nutzen-Verhältnis erzielbar ist. Die Vermittlungsstellen, die im Wesentlichen für die Herstellung von Verbindungen unter Echtzeitbedingungen ausgelegt sind, werden von der Verarbeitung der Gebührenrohdaten, die mit Ausnahme des sogenannten "Hot Billing"-Verfahrens nicht unter zeitkritischen Bedingungen erfolgen muss, entlastet und können entsprechend kostengünstig hergestellt werden. Auch eine Anpassung an neue Erfordernisse seitens des Gebührenabrechnungsrechners ist leichter möglich, da nicht jede Vermittlungsstelle, sondern nur der die Vermittlungsstellen bedienende Gebührenrechner an den Gebührenabrechnungsrechner angepasst werden muss.

Der Gebührenrechner kann zweckmäßigerweise eine weitgehend ausfallsichere Doppelrechnereinheit sein.

In einer vorteilhaften Weiterbildung der Erfindung überprüft zumindest eine der einem Gebührenrechner zugeordneten Vermittlungsstellen, ob der Gebührenrechner verfügbar ist. Sofern dies nicht der Fall ist, sendet die Vermittlungsstelle dann beispielsweise eine Warnmeldung an eine die Vermittlungsstelle steuernde und überwachende Netzwerkzentrale. Auch wenn der Gebührenrechner eine Fehlermeldung oder eine Informationsmeldung zu senden hat, sendet er eine solche Meldung vorteilhafterweise an eine oder mehrere der ihm zugeordneten Vermittlungsstellen, die dann die Netzwerkzentrale informiert. Der Gebührenrechner braucht somit nicht unbedingt eine eigene Schnittstelle für eine Netzwerkzentrale und aus Sicht der Netzwerkzentrale bildet eine Vermittlungsstelle und der ihr zugeordnete Gebührenrechner einen gemeinsamen, integral zu steuernden und zu überwachenden Netzknoten.

Zur Erhöhung der Ausfallsicherheit ist in einer weiteren vorteilhaften Variante der Erfindung einer Vermittlungsstelle nicht nur ein Gebührenrechner zugeordnet, sondern auch zumindest ein zweiter Gebührenrechner oder noch weitere Gebührenrechner. Wenn der erste Gebührenrechner überlastet ist oder ausfällt, kann die Vermittlungsstelle dann ihre Gebührenrohdaten an den zweiten Gebührenrechner senden.

Eine weitere Erhöhung der Ausfallsicherheit erhält man dadurch, dass eine Vermittlungsstelle und der ihr zugeordnete Gebührenrechner über alternative Kommunikationspfade miteinander kommunizieren können. Bei Ausfall eines Kommunikationspfade kann dann der jeweils andere Kommunikationspfad genutzt werden. Besonders ausfallsicher ist diese Variante der Erfindung, wenn für die Kommunikationspfade unterschiedliche physikalische Wege oder gar unterschiedliche Telekommunikationsnetze benutzt werden.

In einer bevorzugten Variante der Erfindung, kommunizieren eine Vermittlungsstelle und der ihr zugeordnete Gebührenrechner über eine Verbindung, auf der ein Internet-Protokoll verwendet werden kann, da hierfür insbesondere auf Seiten des Gebührenrechners kostengünstig erhältliche Komponenten eingesetzt werden können und ein Internet-Protokoll für die Telegramm-Schnittstelle zwischen Gebührenrechner und Vermittlungsstelle flexibel anpassbar ist.

Im folgenden werden die Erfindung und ihre Vorteile anhand eines Ausführungsbeispiels unter Zuhilfenahme der Zeichnungen dargestellt.

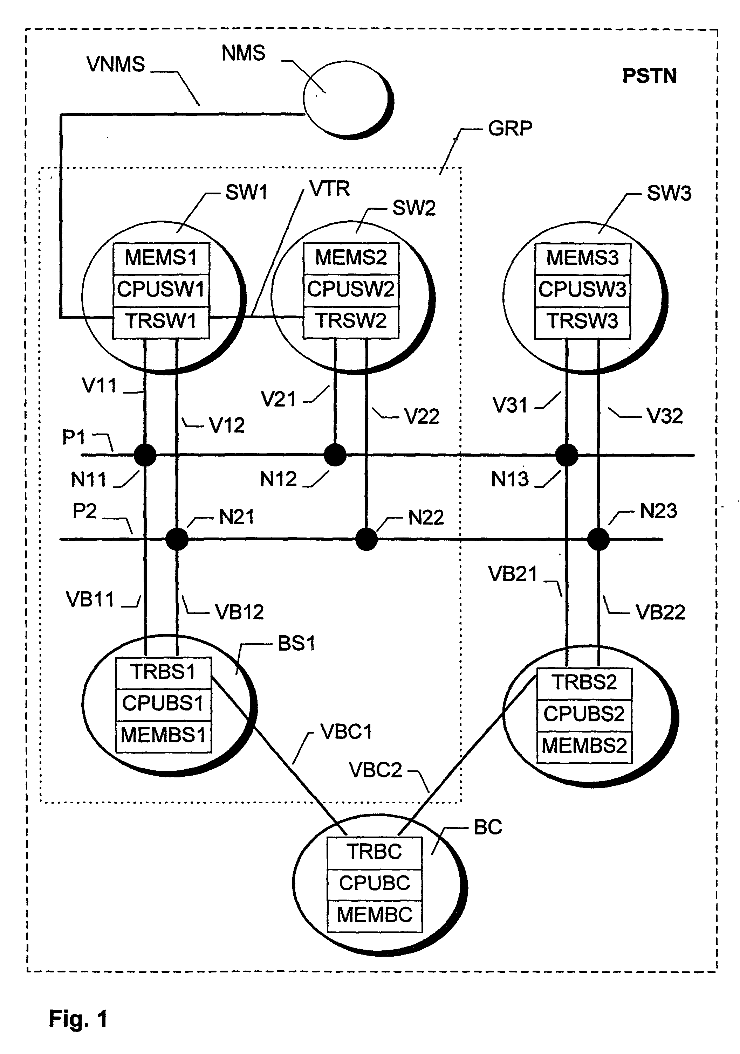

- Figur 1: zeigt eine Anordnung zur Ausführung des erfindungsgemäßen Verfahrens Ausführungsbeispielen von erfindungsgemäßen Vermittlungsstellen SW1, SW2 und SW3 sowie erfindungsgemäßen Gebührenrechnern BS1 und BS2, die mit einem erfindungsgemäßen Gebührenabrechnungsrechner BC verbunden sind.

In Figur 1 ist eine beispielhafte Anordnung dargestellt, mit der die Erfindung ausgeführt werden kann.

Von einem Telekommunikationsnetz PSTN, das beispielsweise ein ISDN-Telekommunikationsnetz (ISDN = Integrated Services Digital Network), ein Mobilfunk-Telekommunikationsnetz oder ein gemischtes Sprach- und Datennetzwerk sein kann, sind stellvertretend für weitere, in Figur 1 nicht gezeigte Einrichtungen, Vermittlungsstellen SW1, SW2 und SW3 sowie Gebührenrechner BS1 und BS2 gezeigt. Der Gebührenrechner BS1 ist über eine Verbindung VBC1, der Gebührenrechner BS2 über eine Verbindung VBC2 mit einem Gebührenabrechnungsrechner BC verbunden. Die Verbindungen VBC1 und VBC2 können beispielsweise auf einem LAN (Local Area Network) oder einem WAN (Wide Area Network) ständig aufgebaut sein oder auf Bedarf aufgebaut werden. Die Vermittlungsstellen SW1 und SW2 sind über eine Verbindungsleitung VTR miteinander verbunden. Bei der Verbindungsleitung VTR kann es sich um ein Kanalbündel zwischen den beiden Vermittlungsstellen handeln. Es ist aber auch möglich, dass die Verbindung VTR über weitere, in Figur 1 nicht dargestellte Vermittlungsstellen führt. Die Vermittlungsstellen SW1, SW2 und SW3 bedienen jeweils nicht dargestellte Teilnehmeranschlussleitungen, die sowohl an die jeweiligen Vermittlungsstellen SW1, SW2 und SW3 direkt angeschlossen sein können, als auch über vorgelagerte Ortsvermittlungsstellen oder Vorfeldeinrichtungen. Das Telekommunikationsnetz PSTN kann auch weitere, aus Gründen der Übersichtlichkeit nicht gezeigte Verbindungsleitungen, Vermittlungsstellen etc. aufweisen. Die Vermittlungsstellen SW1, SW2 und SW3 ermitteln Gebührenrohdaten für Telekommunikationsdienste, die beispielsweise durch Nutzung der von ihnen bedienten Teilnehmeranschlussleitungen für Gesprächs- oder Datenverbindungen oder für Dienste eines sogenannten Intelligenten Netzes anfallen. Die Gebührenrohdaten senden die Vermittlungsstellen SW1, SW2 und SW3 an die Gebührenrechner BS1 und BS2.

Von der Vermittlungsstelle SW1 sind beispielhaft einige wesentliche Komponenten gezeigt, nämlich ein Verbindungsmittel-TRSW1 sowie ein Steuermittel CPUSW1 und ein Speichermittel MEMS1. Mit dem Verbindungsmittel TRSW1 kann die Vermittlungsstelle SW1 einerseits Daten- und Sprachverbindungen zwischen Teilnehmeranschlussleitungen oder anderen Vermittlungsstellen aufbauen. Andererseits kann das Verbindungsmittel TRSW1 auch Verbindungen zur Übertragung von Gebührenrohdaten, wie z.B. eine Verbindung V11-VB11 zu dem Gebührenrechner BS1 aufbauen. Das Verbindungsmittel TRSW1 enthält beispielsweise Ein-/Ausgabebaugruppen und Teilnehmeranschlussmodule. Bei dem Steuermittel CPUSW1 handelt es sich um einen Prozessor oder um eine Gruppe von Prozessoren, die Befehle ausführen können, die in dem Speichermittel MEMS1 gespeichert sind. Das Steuermittel CPUSW1 steuert die Funktionen der Vermittlungsstelle SW1 und nimmt dabei beispielsweise auf die Funktionen des Verbindungsmittels TRSW1 Einfluss. Das Verbindungsmittel TRSW1, das Steuermittel CPUSW1 und das Speichermittel MEMS1 sind durch in Figur 1 nicht dargestellte Verbindungen untereinander verbunden. Ferner kann die Vermittlungsstelle SW1 weitere Baugruppen aufweisen, z.B. ein Koppelnetzwerk oder eine Schnittstelle zu einem Network Management System.

Die Vermittlungsstellen SW2 und SW3 sind intern ähnlich aufgebaut wie die Vermittlungsstelle SW1. Für die Vermittlungsstelle SW2 erfüllt das Steuermittel CPUSW2, für die Vermittlungsstelle SW3 das Steuermittel CPUSW3 diejenigen Funktionen, die das Steuermittel CPUSW1 für die Vermittlungsstelle SW1 erfüllt. Femer verfügt die Vermittlungsstelle SW2 über Speichermittel MEMS2 und die Vermittlungsstelle SW3 über Speichermittel MEMS3, die jeweils mit dem Speichermittel MEMS1 der Vermittlungsstelle SW1 vergleichbare Funktionen leisten. Mit Hilfe eines Verbindungsmittels TRSW2 können die Vermittlungsstelle SW2, mit Hilfe eines Verbindungsmittels TRSW3 die Vermittlungsstelle SW3 Verbindungen aufbauen. Die Verbindungsmittel TRSW2 und Verbindungsmittel TRSW3 erfüllen ähnliche Funktionen wie das Verbindungsmittel TRSW1. Das Verbindungsmittel TRSW2, das Steuermittel CPUSW2 und das Speichermittel MEMS2 sowie das Verbindungsmittel TRSW3, das Steuermittel CPUSW3 und das Speichermittel MEMS3 sind jeweils durch in Figur 1 nicht dargestellte Verbindungen untereinander verbunden.

Der Vermittlungsstelle SW1 und der Vermittlungsstelle SW2 ist ein Gebührenrechner BS1 zugeordnet, angedeutet durch einen gestrichelten Kasten GRP. Der Gebührenrechner BS1 übernimmt für die Vermittlungsstellen SW1 und SW2 die Verarbeitung von deren Gebührenrohdaten und erzeugt aus diesen Gebührenabrechungsdaten für den Gebührenabrechnungsrechner BC. Der Gebührenrechner BS1 weist ein Verbindungsmittel TRBS1, sowie ein Steuermittel CPUBS1 und Speichermittel MEMBS1 auf. Bei dem Gebührenrechner BS1 kann es sich um einen Server handeln, der durch ein UNIX-Betriebssystem oder ein Windows-NT-Betriebssystem betrieben wird. Das Steuermittel CPUBS1 ist ein Prozessor oder ein Cluster von Prozessoren, das die Befehle des Betriebssystems, das in dem Speicher MEMBS1 gespeichert ist, ausführt. Weiterhin sind in dem Speichermittel MEMBS1, das beispielsweise eine Festplatte oder RAM-Bausteine umfasst, Programmcode-Sequenzen gespeichert, die von dem Steuermittel CPUBS1 ausgeführt werden und die Funktionen des Gebührenrechners BS1 steuern. Das Verbindungsmittel TRBS1, das Steuermittel CPUBS1 und das Speichermittel MEMBS1 sind durch in Figur 1 nicht dargestellte Verbindungen untereinander verbunden.

Das Steuermittel CPUBS1 beeinflusst auch die Funktionen des Verbindungsmittels TRBS1, mit dem z.B. die erwähnte Verbindung V11-VB11 aufgebaut werden kann. Der Gebührenrechner BS1 weist auch weitere, in Figur 1 nicht dargestellte Baugruppen auf, z.B. einen Monitor, eine Tastatur und eine Maus. Der Gebührenrechner BS1 kann auch weitere Vermittlungsstellen außer den Vermittlungsstellen SW1 und SW2 bedienen.

Der Gebührenrechner BS1 ist vorzugsweise eine Doppelrechnereinheit oder Mehrrechneranordnung, deren Rechner z.B. über ein lokales Netzwerk miteinander verbunden sind, so dass bei Ausfall eines Rechners der oder die noch verbleibenden Rechner die Funktionen des ausgefallenen Rechners übernehmen. Das Steuermittel CPUBS1, die Speichermittel MEMBS1 und die Verbindungsmittel TRBS1 können jedoch auch jeweils aus gedoppelten Komponenten bestehen, so dass bei Ausfall einer der genannten Komponenten die jeweils andere Komponente deren Funktionen übernimmt.

Der Vermittlungsstelle SW3 ist der Gebührenrechner BS2 zugeordnet, der für die Vermittlungsstelle SW3 deren Gebührenrohdaten zu Gebührenabrechungsdaten für den Gebührenabrechnungsrechner BC aufbereitet. Der Gebührenrechner BS2 ist im Grunde gleich aufgebaut wie der Gebührenrechner BS1 und weist ein Steuermittel CPUBS2, ein Speichermittel MEMBS2 und ein Verbindungsmittel TRBS2 auf, die untereinander durch in Figur 1 nicht dargestellte Verbindungen miteinander verbunden sind und deren Funktionen grundsätzlich gleichartig sind wie die Funktionen des Steuermittels CPUBS1, des Speichermittels MEMBS1 sowie des Verbindungsmittels TRBS1. Wie der Gebührenrechner BS1 kann auch der Gebührenrechner BS2 eine Mehrrechneranordnung sein oder gedoppelte Komponenten aufweisen. Die Vermittlungsstelle SW3 und der Gebührenrechner BS2 können auch über ein LAN miteinander gekoppelt sein und bilden dann eine Kombination aus Gebührenrechner und Vermittlungsstelle der eingangs geschilderten Art.

Der Gebührenabrechnungsrechner BC erstellt für Nutzer des Telekommunikationsnetzes PSTN, also auch für Nutzer der von den durch die Vermittlungsstellen SW1, SW2 und SW3 bedienten Teilnehmeranschlussleitungen, Gebührenabrechungen aus Gebührenabrechungsdaten, die die Gebührenrechner BS1 und BS2 für die Vermittlungsstellen SW1, SW2 und SW3 erzeugen und senden. Der Gebührenabrechnungsrechner BC ist beispielsweise ein sogenanntes "Billing Center" (BC) oder "Customer Care and Billing Center" (CCBC).

Von dem Gebührenabrechnungsrechner BC sind beispielhaft einige wesentliche Komponenten gezeigt, nämlich ein Verbindungsmittel TRBC sowie ein Steuermittel CPUBC und ein Speichermittel MEMBC. Über das Verbindungsmittel TRBC ist der Gebührenabrechungsrechner BC zur Übertragung Gebührenabrechungsdaten mit den Gebührenrechnern BS1 und BS2 verbunden. Bei dem Steuermittel CPUBC handelt es sich um einen Prozessor oder um eine Gruppe von Prozessoren, die Programmcodesequenzen ausführen können, die in dem Speichermittel MEMBC gespeichert sind. Das Steuermittel CPUBC steuert die Funktionen der Gebührenabrechnungsrechners BC und nimmt dabei beispielsweise auf die Funktionen des Verbindungsmittels TRBC Einfluss. Das Verbindungsmittel TRBC, das Steuermittel CPUBC und das Speichermittel MEMBC sind durch in Figur 1 nicht dargestellte Verbindungen untereinander verbunden.

Die Vermittlungsstelle SW1 ist über eine Verbindung V11 und einem Knotenpunkt N11 mit einer Kommunikationsstruktur P1 und über eine Verbindung V12 und einem Knotenpunkt N21 mit einer Kommunikationsstruktur P2 verbunden. Der Gebührenrechner BS1 ist über eine Verbindung VB11 und dem Knotenpunkt N11 mit der Kommunikationsstruktur P1 und über eine Verbindung VB12 und dem Knotenpunkt N21 mit der Kommunikationsstruktur P2 verbunden. Über die Verbindungen V11-N11-VB11 sowie V12-N21-VB12 sendet die Vermittlungsstelle SW1 an den Gebührenrechner BS1 Gebührenrohdaten, die für durch die Vermittlungsstelle SW1 erbrachte Telekommunikationsdienste angefallene Gebührendaten enthalten. Die Vermittlungsstelle SW1 versendet die Gebührenrohdaten beispielsweise in ASN.1-Datenstrukturen (ASN.1 = Abstract Syntax Notation 1). Der Gebührenrechner BS1 erzeugt aus diesen Gebührenrohdaten Gebührenabrechungsdaten für den Gebührenabrechnungsrechner BC, die der Gebührenrechner BS1 ebenfalls in ASN.1-Datenstrukturen an den Gebührenabrechnungsrechner BC auf der Verbindung VBC1 versenden kann, aber auch in einem proprietären, speziell auf die Erfordernisse des Gebührenabrechnungsrechners BC angepassten Format.

Die Kommunikationsstrukturen P1 und P2 sind in Figur 1 beispielhaft busartig dargestellt und können beispielsweise jeweils für ein Ethernet stehen. Die Kommunikationsstrukturen P1 und P2 können auch als ein WAN bezeichnet werden (WAN = Wide Area Network). Auf den Kommunikationsstrukturen P1 und P2 wird vorzugsweise mit einem Internet Protokoll oder mit dem Transmission Control Protocol / Internet Protocol (TCP/IP) übertragen.

Es ist auch möglich, dass z.B. die Kommunikationsstruktur P1 auf einem Signalisierungsnetzwerk aufsetzt, beispielsweise dem zentralen Zeichengabesystem Nr. 7, während die Kommunikationsstruktur P2 auf einem X.25-Netzwerk oder einem ATM-Netzwerk (ATM = Asynchronous Transfer Mode) aufgebaut ist. Weitere mögliche Trägermedien für die Kommunikationsstrukturen P1 und P2 sind beispielsweise Frame-Relay-Netzwerke, Virtuelle Private Netzwerke (VPN = Virtual Private Network), von der Deutschen Telekom AG angebotene Datex-M-Netze oder - bei Ausnutzung ausreichender Sicherungsmechnismen gegen unberechtigten Zugriff auf die zu übertragenden Gebührenrohdaten - auch das Internet. Die Knotenpunkte N11 und N21 sind beispielsweise Router, Access-Server oder sonstige Netzknoten oder Netzzugangseinrichtungen der Kommunikationsstrukturen P1 und P2.

Die Verbindung V11-VB11 und/oder die Verbindung V21-V22 kann auch auf einem oder mehreren Nutzkanälen auf dem Telekommunikationsnetz PSTN, z.B. auf ISDN-Verbindungen aufgebaut sein. Dann kann z.B. der Knotenpunkt N11 auch entfallen oder eine Vermittlungsstelle des Telekommunikationsnetzes PSTN sein. Eine Nutzkanal-Verbindung auf dem Telekommunikationsnetz PSTN kann als dauerhafte Verbindung, z.B. als "Leased-Line"-Verbindung, aufgebaut sein oder auf Bedarf als Wählverbindung hergestellt werden.

Die Verbindungen V11 und V12 sowie die Verbindungen VB11 und VB12 können jeweils mehrere Übertragungskanäle umfassen. Weiter kann jede der Verbindungen V11, V12, VB11 und VB12 zur Erhöhung der Ausfallsicherheit jeweils mehrfache, z.B. gedoppelte, physikalisch voneinander unabhängige Übertragungskanäle aufweisen. Vorzugsweise enden dabei nicht nur die Verbindungen V11 und V12 an separaten Ein-/Ausgabebaugruppen des Verbindungsmittels TRSW1 sowie die Verbindungen VB11 und VB12 an separaten Ein-/Ausgabebaugruppen des Verbindungsmittels TRBS1, sondern im Falle von gedoppelten Übertragungskanälen auch diese Übertragungskanäle jeweils an separaten Ein-/Ausgabebaugruppen. Gerade wenn zur Erhöhung der Ausfallsicherheit jeweils gedoppelte, physikalisch voneinander unabhängige Übertragungskanäle eingesetzt werden, sind die Knotenpunkte N11 und N21 zweckmäßigerweise zumindest gedoppelt vorhanden.

Durch die genannten sowie auch durch weitere nicht dargestellte Maßnahmen zu einer möglichtst ausfallsicheren Übertragung von Gebührenrohdaten von der Vermittlungsstelle SW1 zu dem Gebührenrechner BS1 entsteht ein insgesamt sicheres System aus Vermittlungsstelle und Gebührenrechner, das auch bei einer Störung eines Übertragungsweges mit Hilfe zumindest eines zweiten Übertragungsweges zuverlässig funktioniert.

Die Vermittlungsstelle SW2 ist über eine Verbindung V21 und einem Knotenpunkt N12 mit der Kommunikationsstruktur P1 und über eine Verbindung V22 und einem Knotenpunkt N22 mit der Kommunikationsstruktur P2 verbunden. Ferner ist die Vermittlungsstelle SW3 über eine Verbindung V31 und einem Knotenpunkt N13 mit der Kommunikationsstruktur P1 und über eine Verbindung V32 und einem Knotenpunkt N23 mit der Kommunikationsstruktur P2 verbunden. Der Gebührenrechner BS2 ist über eine Verbindung VB21 und dem Knotenpunkt N13 mit der Kommunikationsstruktur P1 und über eine Verbindung VB22 und dem Knotenpunkt N23 mit der Kommunikationsstruktur P2 verbunden.

Im störungsfreien Zustand und unter üblicher Belastung senden im vorliegenden Fall die Vermittlungsstellen SW1 und SW2 ihre Gebührenrohdaten an den Gebührenrechner BS1, die Vermittlungsstelle SW3 ihre Gebührenrohdaten an den Gebührenrechner BS2. Dabei kann die Vermittlungsstelle SW1 die Gebührenrohdaten in einem anderen Format, einem anderen Aufbau und in einem anderen Umfang an den Gebührenrechner BS1 senden als die Vermittlungsstelle SW2 ihre Gebührenrohdaten. Ein solcher Fall kann z.B. auftreten, wenn im Zuge eines Softwareaustausches die Vermittlungsstelle SW1 mit einer anderen Software betrieben wird als die Vermittlungsstelle SW2. Der Gebührenrechner BS1 kann z.B. mit Hilfe von in dem Speichermittel MEMBS1 abgelegtem und von dem Steuermittel CPUBS1 ausgeführtem Programmcode die unterschiedlich gearteten Gebührenrohdaten der Vermittlungsstellen SW1 und SW2 jeweils auswerten und in Gebührenabrechungsdaten für den Gebührenabrechnungsrechner BC umwandeln.

Üblicherweise ist ein Gebührenabrechnungsrechner dafür ausgelegt, dass er jeweils von einer Vermittlungsstelle oder einer Anordnung aus Vermittlungsstelle und Gebührenrechner jeweils nur die Gebührenabrechungsdaten gerade dieser Vermittlungsstelle empfängt. Im vorliegenden Fall jedoch, sendet der Gebührenrechner BS1 sowohl von der Vermittlungsstelle SW1 stammende erste Gebührenabrechungsdaten als auch von der Vermittlungsstelle SW2 stammende zweite Gebührenabrechungsdaten. Damit der Gebührenabrechnungsrechner BC die ersten und die zweiten Gebührenabrechungsdaten den Vermittlungsstellen SW1 bzw. SW2 zuordnen kann, fügt der Gebührenrechner in die ersten und die zweiten Gebührenabrechungsdaten jeweils den Vermittlungsstellen SW1 bzw. SW2 zugeordnete Identifizierer ein. Es ist jedoch auch möglich, dass die Verbindung VBC1 mehrere separate Kanäle oder separate Verbindungswege aufweist und dass jeweils ein Kanal oder eine Gruppe von Kanälen den ersten Gebührenabrechungsdaten der Vermittlungsstelle SW1 sowie ein anderer Kanal oder eine andere Gruppe von Kanälen den zweiten Gebührenabrechungsdaten der Vermittlungsstelle SW2 zugeordnet ist.

Üblicherweise fragt der Gebührenabrechnungsrechner BC Gebührenabrechungsdaten bei den Gebührenrechnern BS1 und BS2 ab. Dazu fordert der Gebührenabrechnungsrechner BC beispielsweise den Gebührenrechner BS1 mit Hilfe von CMISE-Telegrammen (CMISE = Common Management Information Element) auf, momentan von dem Gebührenrechner BS1 gespeicherte Gebührenabrechungsdaten an den Gebührenabrechnungsrechner BC zu senden. Mit Hilfe des FTAM-Protokolls (FTAM = File Transfer Access Medium) sendet der Gebührenrechner BS1 dann die Gebührenabrechungsdaten in Form von Dateien (= Files). Weitere CMISE-Telegramme zwischen Gebührenabrechnungsrechner BC und Gebührenrechner BS1 schliessen dann die Übertragungsprozedur ab. Die Speichermittel MEMBS1 und MEMBS2 sind dabei so ausgelegt, dass der jeweilige Gebührenrechner BS1 bzw. BS2 zwischen den Abfragen durch den Gebührenabrechnungsrechner BC Gebührenrohdaten und/oder Gebührenabrechungsdaten zwischenspeichern können. Der Gebührenabrechnungsrechner BC kann aber auch von dem Gebührenrechner BS1 gespeicherte Gebührenabrechungsdaten beispielsweise mit Hilfe des FTP-Protokolles (File Transfer Protocol) bei dem Gebührenrechner BS1 abfragen.

Es ist jedoch auch möglich, dass der Gebührenrechner BS1 Gebührenabrechungsdaten nicht auf Abfrage, sondern spontan jeweils nach Empfang von Gebührenrohdaten von der Vermittlungsstelle SW1 oder der Vermittlungsstelle SW2 an den Gebührenabrechnungsrechner BC übermittelt. Ein solches Verfahren wird auch als "Hot-Billing" oder "Realtime Billing" bezeichnet.

Tritt in dem "aktiven" Gebührenrechner BS1 ein Fehler auf oder ist der Gebührenrechner BS1 überlastet, so können die Vermittlungsstelle SW1 und/oder die Vermittlungsstelle SW2 ihre Gebührenrohdaten zwar zunächst in ihrem Speichermittel MEMS1 bzw. MEMS2 speichern, die zweckmäßigerweise entsprechend für einen solchen Fall ausgelegt sind. Die Vermittlungsstellen SW1 und SW2 können jedoch auch ihre Gebührenrohdaten an den Gebührenrechner BS2 senden, der im Normalbetrieb des "aktiven" Gebührenrechners BS1 aus Sicht der Vermittlungsstellen SW1 und SW2 eine "Standby"-Funktion ausführt. Den Ausfall oder die Überlastung des Gebührenrechners BS1 und damit eine mögliche Bedingung zum Versenden der Gebührenrohdaten an den Gebührenrechner BC2 ermittelt die Vermittlungsstelle SW1 beispielsweise dadurch, dass sie Gebührenrohdaten erfolglos an den Gebührenrechner NS1 zu versenden versucht. Der Gebührenrechner BS2 übernimmt dann die Funktionen des Gebührenrechners BS1 und sendet für die Vermittlungsstellen SW1 und SW2 Gebührenabrechungsdaten an den Gebührenabrechnungsrechner BC. Es ist auch möglich, dass die Vermittlungsstellen SW1 und SW2 nicht nur im Störfall Gebührenrohdaten an den Gebührenrechner BS2 senden, sondern auch im Normalbetrieb. Dabei kann in einem solchen "Loadsharing"-Verfahren die Belastung für die Gebührenrechner BS1 und BS2 durch die Vermittlungsstellen SW1 und SW2 nach einem vorbestimmten Verhältnis festgelegt sein. Fällt einer der Gebührenrechner BS1 oder BS2 aus, so übernimmt der jeweils andere Gebührenrechner die Funktionen des ausgefallenen Gebührenrechners.

Weiter können beispielsweise auch die Verbindungen V11-VB11 sowie V12-VB12 sowohl in einem "Aktiv/Standby"-Verfahren als auch ein einem "Loadsharing"-Verfahren, also einem Lastverteilungsverfahren, betrieben werden. Ferner ist es möglich, dass z.B. die Verbindung V12-VB12 entfällt und die Vermittlungsstelle SW1 an den Gebührenrechner BC1 im Normalbetrieb ausschließlich über die Verbindung V11-VB11 Gebührenrohdaten sendet. Wenn die Verbindung V11-VB11 gestört oder überlastet ist, kann die Vermittlungsstelle SW1 auch Gebührenrohdaten über die Verbindung VTR an die Vermittlungsstelle SW2 senden. Die Vermittlungsstelle SW2 leitet dann die Gebührenrohdaten der Vermittlungsstelle SW1 an den Gebührenrechner über die Verbindungen V21-VB21 oder V22-VB22 weiter. Ferner kann dem Gebührenrechner BS1 eine Vermittlungsstelle vorgeschaltet sein, die einen Endpunkt für die Verbindungen VB11 und VB12 bildet, beispielsweise wenn diese über Nutzkanäle des Telekommunikationsnetzes PSTN geführt sind.

Gerade für die oben beschriebenen Umschalteverfahren der Vermittlungsstellen SW1 und SW2 zwischen den Gebührenrechnern BS1 und BS2 ist es zweckmäßig, dass die Vermittlungsstellen SW1 und SW2 - vorzugsweise zyklisch - die Verfügbarkeit des ihnen jeweils zugeordneten Gebührenrechners überprüfen. Das kann einerseits durch geeignete Prüftelegramme erfolgen, andererseits aber auch gewissermaßen automatisch, indem die Vermittlungsstelle SW1 z.B. jedes erfolgreiche Versenden von Gebührenrohdaten an den Gebührenrechner BS1 als Beleg für dessen Verfügbarkeit wertet.

Die Vermittlungsstellen SW1, SW2 und SW3 werden von einem sogenannten Network Management System überwacht und gesteuert, von dem beispielhaft ein Steuerungsrechner NMS gezeigt ist, der über eine Verbindung VNMS die Vermittlungsstelle SW1 steuert und überwacht. Die Verbindung VNMS sowie der Steuerungsrechner NMS können z.B. zu einem TMN-System (Telecommunications Management Network) gehören. Wenn beispielsweise eine Störung bei dem Gebührenrechner BS1 auftritt, die die Vermittlungsstelle SW1 betrifft, sendet der Gebührenrechner BS1 eine Fehlermeldung an die Vermittlungsstelle SW1. Die Vermittlungsstelle SW1 benachrichtigt daraufhin den Steuerungsrechner NMS. Umgekehrt kann der Steuerungsrechner NMS auch Steuerkommandos über die Vermittlungsstelle SW1 an den Gebührenrechner BS1 senden. Es ist jedoch auch möglich, dass der Gebührenrechner BS1 eine eigene, sogenannte "OAM"-Schnittstelle (OAM = Operation Administration Maintenance) aufweist, die in Figur 1 nicht dargestellt ist und über die der Gebührenrechner BS1 direkt, ohne die Vermittlungsstelle SW1 mit dem Steuerungsrechner NMS oder einem alternativen, nicht dargestellten Steuerungsrechner verbunden ist. Der Gebührenrechner BS1 kann auch einerseits von dem Steuerungsrechner NMS zusammen mit der Vermittlungsstelle SW1 sozusagen aus Sicht des Telekommunikationsnetzes PSTN überwacht und gesteuert werden, und andererseits in Bezug auf Gebührenaufbereitung zusammen mit dem Gebührenabrechnungsrechner BC von dem nicht dargestellten Steuerungsrechner.

## Patentansprüche

1. Verfahren zur Verarbeitung von Gebührendaten für Telekommunikations-Dienstleistungen, bei dem
- eine erste Vermittlungsstelle (SW1) erste Gebührenrohdaten für Telekommunikations-Dienstleistungen an einen (ersten) Gebührenrechner (BS1) übermittelt,
- der (erste) Gebührenrechner (BS1) die ersten Gebührenrohdaten in durch einen Gebührenabrechnungsrechner (BC) erfassbare erste Gebührenabrechnungsdaten umwandelt,
- der (erste) Gebührenrechner (BS1) die ersten Gebührenabrechnungsdaten an den Gebührenabrechnungsrechner (BC) übermittelt,
**dadurch gekennzeichnet,**
- **dass** zumindest eine zweite Vermittlungsstelle (SW2) zweite Gebührenrohdaten für Telekommunikations-Dienstleistungen an den (ersten) Gebührenrechner (BS1) übermittelt,
- **dass** der (erste) Gebührenrechner (BS1) die zweiten Gebührenrohdaten in durch den Gebührenabrechnungsrechner (BC) erfassbare zweite Gebührenabrechnungsdaten umwandelt und
- **dass** der (erste) Gebührenrechner (BS1) die zweiten Gebührenabrechnungsdaten an den Gebührenabrechnungsrechner (BC) übermittelt.

2. Verfahren nach Anspruch 1, **dadurch gekennzeichnet,**
- **dass** zumindest die erste Vermittlungsstelle (SW1) die ersten Gebührenrohdaten für Telekommunikations-Dienstleistungen zumindest teilweise an einen zweiten Gebührenrechner (BS2) übermittelt,
- **dass** der zweite Gebührenrechner (BS2) die ersten Gebührenrohdaten in durch den Gebührenabrechnungsrechner (BC) erfassbare erste Gebührenabrechnungsdaten umwandelt und
- **dass** der zweite Gebührenrechner (BS2) die ersten Gebührenabrechnungsdaten an den Gebührenabrechnungsrechner (BC) übermittelt.

3. Verfahren nach Anspruch 1, **dadurch gekennzeichnet, dass** zumindest die erste Vermittlungsstelle (SW1) die Verfügbarkeit des ersten Gebührenrechners (BS1) überprüft.

4. Verfahren nach Anspruch 2, **dadurch gekennzeichnet, dass** zumindest die erste Vermittlungsstelle (SW1) die ersten Gebührenrohdaten in Abhängigkeit von der Verfügbarkeit zumindest des ersten Gebührenrechners (BS1) an den ersten Gebührenrechner (BS1) oder den zweiten Gebührenrechner (BS2) übermittelt.

5. Verfahren nach Anspruch 1, **dadurch gekennzeichnet, dass** zur Übermittlung der ersten Gebührenrohdaten für Telekommunikations-Dienstleistungen von der ersten Vermittlungsstelle (SW1) an den (ersten) Gebührenrechner (BS1) zwischen einem ersten Kommunikationspfad (V11, VB11) und einem zweiten Kommunikationspfad (V12, VB12) umgeschaltet wird.

6. Verfahren nach Anspruch 5, **dadurch gekennzeichnet, dass** der erste Kommunikationspfad (V11, VB11) und der zweite Kommunikationspfad (V12, VB12) auf physikalisch unterschiedlichen Verbindungswegen aufgebaut werden.

7. Verfahren nach Anspruch 1, **dadurch gekennzeichnet, dass** der erste Gebührenrechner (BS1) im Störungsfall Alarmmeldungen an die erste Vermittlungsstelle (SW1) sendet, die die erste Vermittlungsstelle (SW1) an eine Netzwerksteuerungseinrichtung (NMS) weitermeldet.

8. Verfahren nach Anspruch 1, **dadurch gekennzeichnet, dass** zumindest die ersten Gebührenrohdaten in einem Internet Protokoll an den (ersten) Gebührenrechner (BS1) übermittelt werden.

9. Vermittlungsstelle (SW1) zur Verarbeitung von Gebührendaten für Telekommunikations-Dienstleistungen, mit Sendemitteln (TRSW1) zum Senden von Gebührenrohdaten für Telekommunikations-Dienstleistungen an einen ersten Gebührenrechner (BS1), der die Gebührenrohdaten in durch einen Gebührenabrechnungsrechner (BC) erfassbare Gebührenabrechnungsdaten umwandelt und dem Gebührenabrechnungsrechner (BC) übermittelt,
**dadurch gekennzeichnet,**
die Vermittlungsstelle (SW1) Erkennungsmittel (CPUSW1, MEMSW1) aufweist, die derart ausgestaltet sind, dass die Vermittlungsstelle (SW1) durch Vergleich mit zumindest einem vorbestimmten Kriterium erkennen kann, dass die Vermittlungsstelle die Gebührenrohdaten für Telekommunikations-Dienstleistungen zumindest teilweise an einen zweiten Gebührenrechner (BS2) übermitteln soll, und dass die Sendemittel (TRSW1) derart ausgestaltet sind, dass die Vermittlungsstelle die Gebührenrohdaten für Telekommunikations-Dienstleistungen in Abhängigkeit von dem zumindest einen vorbestimmten Kriterium zumindest teilweise an den zweiten Gebührenrechner (BS2) übermitteln kann, der die Gebührenrohdaten in durch den Gebührenabrechnungsrechner (BC) erfassbare Gebührenabrechnungsdaten umwandelt und an den Gebührenabrechnungsrechner (BC) übermittelt.

10. Gebührenrechner (BS1) zur Verarbeitung von Gebührendaten für Telekommunikations-Dienstleistungen, der Empfangsmittel (TRBS1) zum Empfangen von durch eine erste Vermittlungsstelle (SW1) übermittelten ersten Gebührenrohdaten für Telekommunikations-Dienstleistungen aufweist, der Konvertierungsmittel (CPUBS1, MEMBS1) zum Umwandeln der ersten Gebührenrohdaten in durch einen Gebührenabrechnungsrechner (BC) erfassbare erste Gebührenabrechnungsdaten aufweist, und der Sendemittel (TRBS1) zum Übermitteln der ersten Gebührenabrechnungsdaten an den Gebührenabrechnungsrechner (BC) aufweist,
**dadurch gekennzeichnet,**
**dass** die Empfangsmittel (TRBS1) derart ausgestaltet sind, dass der Gebührenrechner zumindest zweite, von einer zweiten Vermittlungsstelle (SW2) übermittelte Gebührenrohdaten für Telekommunikations-Dienstleistungen empfangen kann, dass die Konvertierungsmittel (CPUBS1, MEMBS1) derart ausgestaltet sind, dass der Gebührenrechner die zweiten Gebührenrohdaten in durch den Gebührenabrechnungsrechner (BC) erfassbare zweite Gebührenabrechnungsdaten umwandeln kann und dass die Sendemittel (TRBS1) derart ausgestaltet sind, dass der Gebührenrechner die zweiten Gebührenabrechnungsdaten an den Gebührenabrechnungsrechner (BC) übermitteln kann.

11. Gebührenabrechnungsrechner (BC) zur Verarbeitung von Gebührendaten für Telekommunikations-Dienstleistungen, der Empfangsmittel (TRBC) zum Empfangen erster Gebührenabrechnungsdaten von zumindest einem Gebührenrechner (BS1, BS2), die der Gebührenrechner (BS1, BS2) aus von durch eine erste Vermittlungsstelle (SW1) übermittelten ersten Gebührenrohdaten für Telekommunikations-Dienstleistungen bildet,
**dadurch gekennzeichnet,**
**dass** die Empfangsmittel (TRBC) derart ausgestaltet sind, dass der Gebührenabrechnungsrechner (BC) zumindest zweite Gebührenabrechnungsdaten von dem zumindest einen Gebührenrechner (BS1, BS2) empfangen kann, die der Gebührenrechner (BS1, BS2) aus von durch eine zweite Vermittlungsstelle (SW2) übermittelten zweiten Gebührenrohdaten für Telekommunikations-Dienstleistungen bildet, und dass der Gebührenabrechnungsrechner (BC) Zuordnungsmittel (CPUBC, MEMBC) aufweist, die derart ausgestaltet sind, dass der Gebührenabrechnungsrechner (BC) die ersten Gebührenabrechnungsdaten der ersten Vermittlungsstelle (SW1) und die zweiten Gebührenabrechnungsdaten der zweiten Vermittlungsstelle (SW2) zuordnen kann.

12. Gebührenrechner (BS1, BS2) nach Anspruch 10, **dadurch gekennzeichnet, dass** der Gebührenrechner (BS1, BS2) als Mehrfachrechnereinheit ausgeführt ist.

13. Programm-Modul für eine Vermittlungsstelle (SW1) zur Verarbeitung von Gebührendaten für Telekommunikations-Dienstleistungen, wobei das Programm-Modul Programmcode enthält, der von einem Prozessor (CPUSW1) der Vermittlungsstelle (SW1) ausgeführt werden kann, wobei die Vermittlungsstelle (SW1) Sendemittel (TRSW1) zum Senden von Gebührenrohdaten für Telekommunikations-Dienstleistungen an einen ersten Gebührenrechner (BS1) aufweist, der die Gebührenrohdaten in durch einen Gebührenabrechnungsrechner (BC) erfassbare Gebührenabrechnungsdaten umwandelt und dem Gebührenabrechnungsrechner (BC) übermittelt,
**dadurch gekennzeichnet,**
die das Programm-Modul zumindest eine Erkennungsfunktion aufweist, die derart ausgestaltet ist, dass die Vermittlungsstelle (SW1) anhand von Anweisungen der Erkennungsfunktion durch Vergleich mit zumindest einem vorbestimmten Kriterium erkennen kann, dass die Vermittlungsstelle (SW1) die Gebührenrohdaten für Telekommunikations-Dienstleistungen zumindest teilweise an einen zweiten Gebührenrechner (BS2) übermitteln soll, und dass das Programm-Modul zumindest eine Sendefunktion aufweist, die derart ausgestaltet ist, dass die Vermittlungsstelle anhand von Anweisungen der Sendeanweisungsfunktion die Gebührenrohdaten für Telekommunikations-Dienstleistungen in Abhängigkeit von dem zumindest einen vorbestimmten Kriterium zumindest teilweise an den zweiten Gebührenrechner (BS2) übermitteln kann, der die Gebührenrohdaten in durch den Gebührenabrechnungsrechner (BC) erfassbare Gebührenabrechnungsdaten umwandelt und an den Gebührenabrechnungsrechner (BC) übermittelt.

14. Programm-Modul für einen Gebührenrechner (BS1) zur Verarbeitung von Gebührendaten für Telekommunikations-Dienstleistungen, wobei das Programm-Modul Programmcode enthält, der von einem Prozessor (CPUBS1) des Gebührenrechners (BS1) ausgeführt werden kann, wobei der Gebührenrechner (BS1) Empfangsmittel (TRBS1) zum Empfangen von durch eine erste Vermittlungsstelle (SW1) übermittelten ersten Gebührenrohdaten für Telekommunikations-Dienstleistungen aufweist, wobei der Gebührenrechner (BS1) Konvertierungsmittel (CPUBS1, MEMBS1) zum Umwandeln der ersten Gebührenrohdaten in durch einen Gebührenabrechnungsrechner (BC) erfassbare erste Gebührenabrechnungsdaten aufweist, und wobei der Gebührenrechner (BS1) Sendemittel (TRBS1) zum Übermitteln der ersten Gebührenabrechnungsdaten an den Gebührenabrechnungsrechner (BC) aufweist,
**dadurch gekennzeichnet,**
**dass** das Programm-Modul zumindest eine Empfangsfunktion aufweist, die derart ausgestaltet ist, dass der Gebührenrechner (BS1) mit dem Empfangsmittel (TRBS1) anhand von Anweisungen der Empfangsfunktion zumindest zweite, von einer zweiten Vermittlungsstelle (SW2) übermittelte Gebührenrohdaten für Telekommunikations-Dienstleistungen empfangen kann, dass das Programm-Modul zumindest eine Konvertierungsfunktion aufweist, die derart ausgestaltet ist, dass der Gebührenrechner (BS1) mit dem Konvertierungsmittel (CPUBS1, MEMBS1) anhand von Anweisungen der Konvertierungsfunktion die zweiten Gebührenrohdaten in durch den Gebührenabrechnungsrechner (BC) erfassbare zweite Gebührenabrechnungsdaten umwandeln kann und dass das Programm-Modul zumindest eine Sendefunktion aufweist, die derart ausgestaltet ist, dass der Gebührenrechner (BS1) mit dem Sendemittel (TRBS1) anhand von Anweisungen der Sendefunktion die zweiten Gebührenabrechnungsdaten an den Gebührenabrechnungsrechner (BC) übermitteln kann.

15. Programm-Modul für einen Gebührenabrechnungsrechner (BC) zur Verarbeitung von Gebührendaten für Telekommunikations-Dienstleistungen, wobei das Programm-Modul Programmcode enthält, der von einem Prozessor (CPUBC) des Gebührenabrechnungsrechners (BC) ausgeführt werden kann, wobei der Gebührenabrechnungsrechner (BC) Empfangsmittel (TRBC) zum Empfangen erster Gebührenabrechnungsdaten von zumindest einem Gebührenrechner (BS1, BS2) aufweist, die der Gebührenrechner (BS1, BS2) aus von durch eine erste Vermittlungsstelle (SW1) übermittelten ersten Gebührenrohdaten für Telekommunikations-Dienstleistungen bildet,
**dadurch gekennzeichnet,**
**dass** das Programm-Modul zumindest eine Empfangsfunktion aufweist, die derart ausgestaltet ist, dass der Gebührenabrechnungsrechner (BC) mit dem Empfangsmittel (TRBC) anhand von Anweisungen der Empfangsfunktion zumindest zweite Gebührenabrechnungsdaten von dem zumindest einen Gebührenrechner (BS1, BS2) empfangen kann, die der Gebührenrechner (BS1, BS2) aus von durch eine zweite Vermittlungsstelle (SW2) übermittelten zweiten Gebührenrohdaten für Telekommunikations-Dienstleistungen bildet, und dass das Programm-Modul zumindest eine Zuordnungsfunktion aufweist, die derart ausgestaltet ist, dass der Gebührenabrechnungsrechner (BC) die ersten Gebührenabrechnungsdaten der ersten Vermittlungsstelle (SW1) und die zweiten Gebührenabrechnungsdaten der zweiten Vermittlungsstelle (SW2) zuordnen kann.

## Claims

1. Method for processing call-charge data for telecommunication services, in which
- a first switching center (SW1) transmits first raw call-charge data for telecommunication services to a (first) call-charge computer (BS1),
- the (first) call-charge computer (BS1) converts the first raw call-charge data into first billing data that can be collected by a billing computer (BC),
- the (first) call-charge computer (BS1) transmits the first billing data to the billing computer (BC),
**characterized in that**
- at least one second switching center (SW2) transmits second raw call-charge data for telecommunication services to the (first) call-charge computer (BS1),
- the (first) call-charge computer (BS1) converts the second raw call-charge data into second billing data that can be collected by the billing computer (BC) and
- the (first) call-charge computer (BS1) transmits the second billing data to the billing computer (BC).

2. Method according to Claim 1, **characterized in that**
- at least the first switching center (SW1) transmits the first raw call-charge data for telecommunication services at least partially to a second call-charge computer (BS2),
- the second call-charge computer (BS2) converts the first raw call-charge data into first billing data that can be collected by the billing computer (BC) and
- the second call-charge computer (BS2) transmits the first billing data to the billing computer (BC).

3. Method according to Claim 1, **characterized in that** at least the first switching center (SW1) checks the availability of the first call-charge computer (BS1).

4. Method according to Claim 2, **characterized in that** at least the first switching center (SW1) transmits the first raw call-charge data in dependence on the availability at least of the first call-charge computer (BS1) to the first call-charge computer (BS1) or the second call-charge computer (BS2).

5. Method according to Claim 1, **characterized in that** for transmission of the first raw call-charge data for telecommunication services from the first switching center (SW1) to the (first) call-charge computer (BS1) there is a changeover between a first communication path (V11, VB11) and a second communication path (V12, VB12).

6. Method according to Claim 5, **characterized in that** the first communication path (V11, VB11) and the second communication path (V12, VB12) are set up on physically different connection paths.

7. Method according to Claim 1, **characterized in that** in the event of a fault the first call-charge computer (BS1) sends alarm signals to the first switching center (SW1), and the first switching center (SW1) passes on the messages to a network control facility (NMS).

8. Method according to Claim 1, **characterized in that** at least the first raw call-charge data is transmitted in an Internet protocol to the (first) call-charge computer (BS1).

9. Switching center (SW1) for processing call-charge data for telecommunication services, with sending means (TRSW1) for sending raw call-charge data for telecommunication services to a first call-charge computer (BS1), which converts the raw call-charge data into billing data that can be collected by a billing computer (BC) and transmits it to the billing computer (BC),
**characterized in that**
the switching center (SW1) has recognition means (CPUSW1, MEMSW1), which are developed in such a way that the switching center (SW1) can detect from comparison with at least one predetermined criterion that the switching center should transmit the raw call-charge data for telecommunication services at least partially to a second call-charge computer (BS2), and that the sending means (TRSW1) are developed in such a way that the switching center can transmit the raw call-charge data for telecommunication services in dependence on the at least one predetermined criterion at least partially to the second call-charge computer (BS2), which converts the raw call-charge data into billing data that can be collected by the billing computer (BC) and transmits it to the billing computer (BC).

10. Call-charge computer (BS1) for processing call-charge data for telecommunication services, which has receiving means (TRBS1) for receiving first raw call-charge data transmitted by a first switching center (SW1) for telecommunication services, and which has conversion means (CPUBS1, MEMBS1) for converting the first raw call-charge data into first billing data that can be collected by a billing computer (BC), and which has sending means (TRBS1) for transmitting the first billing data to the billing computer (BC),
**characterized in that**
the receiving means (TRBS1) are developed in such a way that the call-charge computer can receive at least second raw call-charge data transmitted from a second switching center (SW2) for telecommunication services, that the conversion means (CPUBS1, MEMBS1) are developed in such a way that the call-charge computer can convert the second raw call-charge data into second billing data that can be collected by the billing computer (BC), and that the sending means (TRBS1) are developed in such a way that the call-charge computer can transmit the second billing data to the billing computer (BC).

11. Billing computer (BC) for processing call-charge data for telecommunication services, with receiving means (TRBC) for receiving first billing data from at least one call-charge computer (BS1, BS2), which forms the billing data from first raw call-charge data transmitted by a first switching center (SW1) for telecommunication services,
**characterized in that**
the receiving means (TRBC) are developed in such a way that the billing computer (BC) can receive at least second billing data from the at least one call-charge computer (BS1, BS2), which forms the billing data from second raw call-charge data transmitted by a second switching center (SW2) for telecommunication services, and that the billing computer (BC) has assignment means (CPUBC, MEMBC), which are developed in such a way that the billing computer (BC) can assign the first billing data to the first switching center (SW1) and the second billing data to the second switching center (SW2).

12. Call-charge computer (BS1, BS2) according to Claim 10, **characterized in that** the call-charge computer (BS1, BS2) is executed as a multiple computer unit.

13. Program module for a switching center (SW1) for processing call-charge data for telecommunication services, wherein the program module contains program code which can be executed by a processor (CPUSW1) of the switching center (SW1), the switching center (SW1) having sending means (TRSW1) for sending raw call-charge data for telecommunication services to a first call-charge computer (BS1), which converts the raw call-charge data into billing data that can be collected by a billing computer (BC) and transmits it to the billing computer (BC),
**characterized in that**
the program module has at least one recognition function, which is developed in such a way that with the help of instructions from the recognition function the switching center (SW1) can detect from comparison with at least one predetermined criterion that the switching center (SW1) should transmit the raw call-charge data for telecommunication services at least partially to a second call-charge computer (BS2), and that the program module has at least one sending function, which is developed in such a way that with the help of instructions from the send instruction function the switching center can transmit the raw call-charge data for telecommunication services in dependence on the at least one predetermined criterion at least partially to the second call-charge computer (BS2), which converts the raw call-charge data into billing data that can be collected by the billing computer (BC) and transmits it to the billing computer (BC).

14. Program module for a call-charge computer (BS1) for processing call-charge data for telecommunication services, wherein the program module contains program code which can be executed by a processor (CPUBS1) of the call-charge computer (BS1), the call-charge computer (BS1) having receiving means (TRBS1) for receiving first raw call-charge data transmitted by a first switching center (SW1) for telecommunication services, the call-charge computer (BS1) having conversion means (CPUBS1, MEMBS1) for converting the first raw call-charge data into first billing data that can be collected by a billing computer (BC), and the call-charge computer (BS1) having sending means (TRBS1) for transmitting the first billing data to the billing computer (BC),
**characterized in that**
the program module has at least one receiving function, which is developed in such a way that with the help of instructions from the receiving function the call-charge computer (BS1) with the receiving means (TRBS1) can receive at least second raw call-charge data transmitted by a second switching center (SW2) for telecommunication services, that the program module has at least one conversion function, which is developed in such a way that with the help of instructions from the conversion function the call-charge computer (BS1) with the conversion means (CPUBS1, MEMBS1) can convert the second raw call-charge data into second billing data that can be collected by the billing computer (BC), and that the program module has at least one sending function, which is developed in such a way that with the help of instructions from the sending function the call-charge computer (BS1) with the sending means (TRBS1) can transmit the second billing data to the billing computer (BC).

15. Program module for a billing computer (BC) for processing call-charge data for telecommunication services, wherein the program module contains program code which can be executed by a processor (CPUBC) of the billing computer (BC), the billing computer (BC) having receiving means (TRBC) for receiving first billing data from at least one call-charge computer (BS1, BS2), which forms the billing data from first raw call-charge data transmitted by a first switching center (SW1) for telecommunication services,
**characterized in that**
the program module has at least one receiving function, which is developed in such a way that with the help of instructions from the receiving function the billing computer (BC) with the receiving means (TRBC) can receive at least second billing data from the at least one call-charge computer (BS1, BS2), which forms the billing data from second raw call-charge data transmitted by a second switching center (SW2) for telecommunication services, and that the program module has at least one assignment function, which is developed in such a way that the billing computer (BC) can assign the first billing data to the first switching center (SW1) and the second billing data to the second switching center (SW2).

## Revendications

1. Procédé de traitement de données de taxes pour des services de télécommunication dans lequel
- un premier central téléphonique (SW1) transmet à un (premier) ordinateur de taxes (BS1) des premières données brutes de taxes pour des services de télécommunication,
- le (premier) ordinateur de taxes (BS1) convertit les premières données brutes de taxes en premières données de facturation de taxes pouvant être enregistrées par un ordinateur de facturation de taxes (BC),
- le (premier) ordinateur de taxes (BS1) transmet à l'ordinateur de facturation de taxes (BC) les premières données de facturation de taxes,
**caractérisé**
- **en ce qu'**au moins un deuxième central téléphonique (SW2) transmet au (premier) ordinateur de taxes (BS1) des deuxièmes données brutes de taxes pour des services de télécommunication,
- **en ce que** le (premier) ordinateur de taxes (BS1) convertit les deuxièmes données brutes de taxes en deuxièmes données de facturation de taxes pouvant être enregistrées par l'ordinateur de facturation de taxes (BC),
- **en ce que** le (premier) ordinateur de taxes (BS1) transmet à l'ordinateur de facturation de taxes (BC) les deuxièmes données de facturation de taxes.

2. Procédé selon la revendication 1, **caractérisé**
- **en ce qu'**au moins le premier central téléphonique (SW1) transmet au moins en partie à un deuxième ordinateur de taxes (BS2) les premières données brutes de taxes pour des services de télécommunication,
- **en ce que** le deuxième ordinateur de taxes (BS2) convertit les premières données brutes de taxes en premières données de facturation de taxes pouvant être enregistrées par l'ordinateur de facturation de taxes (BC)et
- **en ce que** le deuxième ordinateur de taxes (BS2) transmet à l'ordinateur de facturation de taxes (BC) les premières données de facturation de taxes.

3. Procédé selon la revendication 1, **caractérisé en ce qu'**au moins le premier central téléphonique (SW1) vérifie la disponibilité du premier ordinateur de taxes (BS1).

4. Procédé selon la revendication 2, **caractérisé en ce qu'**au moins le premier central téléphonique (SW1) transmet les premières données brutes de taxes au premier ordinateur de taxes (BS1) ou au deuxième ordinateur de taxes (BS2) en fonction de la disponibilité au moins du premier ordinateur de taxes (BS1).

5. Procédé selon la revendication 1, **caractérisé en ce que**, pour la transmission des premières données brutes de taxes pour des services de télécommunication au (premier) ordinateur de taxes (BS1) par le premier central téléphonique (SW1), une commutation a lieu entre un premier chemin de communication (V11), VB11) et un deuxième chemin de communication (V12, VB12).

6. Procédé selon la revendication 5, **caractérisé en ce que** le premier chemin de communication (V11, VB11) et le deuxième chemin de communication (V12, VB12) sont établis sur des voies de liaison physiquement différentes.

7. Procédé selon la revendication 1, **caractérisé en ce qu'**en cas de défaillance, le premier ordinateur de taxes (BS1) envoie au premier central téléphonique (SW1) des messages d'alarme que le premier central téléphonique (SW1) retransmet à un dispositif de commande de réseau (NMS).

8. Procédé selon la revendication 1, **caractérisé en ce qu'**au moins les premières données brutes de taxes sont transmises au (premier) ordinateur de taxes (BS1) dans un protocole Internet.

9. Central téléphonique (SW1) destiné au traitement de données de taxes pour des services de télécommunication, comportant des moyens d'émission (TRSW1) pour l'émission de données brutes de taxes pour des services de télécommunication à un premier ordinateur de taxes (BS1) qui convertit les données brutes de taxes en données de facturation de taxes pouvant être enregistrées par un ordinateur de facturation de taxes (BC) et les transmet à l'ordinateur de facturation de taxes (BC), **caractérisé en ce que** le central téléphonique (SW1) présente des moyens de reconnaissance (CPUSW1, MEMSW1) réalisés de telle sorte que le central téléphonique (SW1) puisse reconnaître, par comparaison avec au moins un critère prédéfini, que le central téléphonique doit transmettre les données brutes de taxes pour des services de télécommunication au moins en partie à un deuxième ordinateur de taxes (BS2), et **en ce que** les moyens d'émission (TRSW1) sont réalisés de telle sorte que le central téléphonique puisse transmettre les données brutes de taxes pour des services de télécommunication en fonction d'au moins un critère prédéfini, au moins en partie au deuxième ordinateur de taxes (BS2) qui convertit les données brutes de taxes en données de facturation de taxes pouvant être enregistrées par l'ordinateur de facturation de taxes (BC) et les transmet à l'ordinateur de facturation de taxes (BC).

10. Ordinateur de taxes (BS1) destiné au traitement de données de taxes pour des services de télécommunication qui présente des moyens de réception (TRBS1) pour la réception des premières données brutes de taxes concernant des services de télécommunication et transmises par un premier central téléphonique (SW1), des moyens de conversion (CPUBS1, MEMBS1) pour la conversion des premières données brutes de taxes en premières données de facturation de taxes pouvant être enregistrées par un ordinateur de facturation de taxes (BC) et des moyens d'émission (TRBS1) pour la transmission des premières données de facturation de taxes à l'ordinateur de facturation de taxes (BC),
**caractérisé en ce que** les moyens de réception (TRBS1) sont réalisés de telle sorte que l'ordinateur de taxes puisse recevoir au moins des deuxièmes données brutes de taxes concernant des services de télécommunication et transmises par un deuxième central téléphonique (SW2), **en ce que** les moyens de conversion (CPUBS1), MEMBS1) sont réalisés de telle sorte que l'ordinateur de taxes puisse convertir les deuxièmes données brutes de taxes en deuxièmes données de facturation de taxes pouvant être enregistrées par l'ordinateur de facturation de taxes (BC) et **en ce que** les moyens d'émission (TRBS1) sont réalisés de telle sorte que l'ordinateur de taxes puisse transmettre les deuxièmes données de facturation de taxes à l'ordinateur de facturation de taxes (BC).

11. Ordinateur de facturation de taxes (BC) destiné au traitement de données de taxes pour des services de télécommunication qui présente des moyens de réception (TRBC) pour la réception des premières données de facturation de taxes qui proviennent d'au moins un ordinateur de taxes (BS1, BS2) et que l'ordinateur de taxes (BS1, BS2) constitue à partir des premières données brutes de taxes concernant des services de télécommunication et transmises par un premier central téléphonique (SW1), **caractérisé en ce que** les moyens de réception (TRBC) sont réalisés de telle sorte que l'ordinateur de facturation de taxes (BC) puisse recevoir au moins des deuxièmes données de facturation qui proviennent d'au moins l'un des ordinateurs de taxes (BS1, BS2) et que l'ordinateur de taxes (BS1, BS2) constitue à partir des deuxièmes données brutes de taxes concernant des services de télécommunication et transmises par un deuxième central téléphonique (SW2), et **en ce que** l'ordinateur de facturation de taxes (BC) présente des moyens d'affectation (CPUBC, MEMBC) réalisés de telle sorte que l'ordinateur de facturation de taxes (BC) puisse affecter les premières données de facturation de taxes au premier central téléphonique (SW1) et les deuxièmes données de facturation de taxes au deuxième central téléphonique (SW2).

12. Ordinateur de taxes (BS1, BS2) selon la revendication 10, **caractérisé en ce que** l'ordinateur de taxes (BS1, BS2) est réalisé sous forme d'unité de plusieurs ordinateurs.

13. Module de programme pour un central téléphonique (SW1) destiné au traitement de données de taxes pour des services de télécommunication dans lequel le module de programme contient un code de programme pouvant être exécuté par un processeur (CPUSW1) du central téléphonique (SW1), dans lequel le central téléphonique (SW1) présente des moyens d'émission (TRSW1) pour l'émission de données brutes de taxes pour des services de télécommunication à un premier ordinateur de taxes (BS1) qui convertit les données brutes de taxes en données de facturation de taxes pouvant être enregistrées par un ordinateur de facturation de taxes (BC) et les transmet à l'ordinateur de facturation de taxes (BC), **caractérisé en ce que** le module de programme présente au moins une fonction de reconnaissance conçue de telle sorte que le central téléphonique (SW1) puisse reconnaître, à l'aide des instructions de la fonction de reconnaissance et par comparaison avec au moins un critère prédéfini, que le central téléphonique (SW1) doit transmettre les données brutes de taxes pour des services de télécommunication au moins en partie à un deuxième ordinateur de taxes (BS2), et **en ce que** le module de programme présente au moins une fonction d'émission conçue de telle sorte que le central téléphonique puisse transmettre, à l'aide des instructions de la fonction d'instruction d'émission, les données brutes de taxes pour des services de télécommunication, en fonction d'au moins un critère prédéfini et au moins en partie au deuxième ordinateur de taxes (BS2) qui convertit les données brutes de taxes en données de facturation de taxes pouvant être enregistrées par un ordinateur de facturation de taxes (BC) et les transmet à l'ordinateur de facturation de taxes (BC).

14. Module de programme pour un ordinateur de taxes (BS1) destiné au traitement de données de taxes pour des services de télécommunication dans lequel le module de programme contient un code de programme pouvant être exécuté par un processeur (CPUBS1) de l'ordinateur de taxes (BS1), dans lequel l'ordinateur de taxes (BS1) présente des moyens de réception (TRBS1) pour la réception de premières données brutes de taxes concernant des services de télécommunication et transmises par un premier central téléphonique (SW1), dans lequel l'ordinateur de taxes (BS1) présente des moyens de conversion (CPUBS1, MEMBS1) pour la conversion des premières données brutes de taxe en premières données de facturation de taxes pouvant être enregistrées par un ordinateur de facturation de taxes (BC) et dans lequel l'ordinateur de taxes (BS1) présente des moyens d'émission (TRBS1) pour la transmission des premières données de facturation de taxes à l'ordinateur de facturation de taxes (BC),
**caractérisé en ce que** le module de programme présente au moins une fonction de réception conçue de telle sorte que l'ordinateur de taxes (BS1) puisse recevoir, avec le moyen de réception (TRBS1) et à l'aide des instructions de la fonction de réception, au moins des deuxièmes données brutes de taxes concernant des services de télécommunication et transmises par un deuxième central téléphonique (SW2), **en ce que** le module de programme présente au moins une fonction de conversion conçue de telle sorte que l'ordinateur de taxes (BS1) puisse convertir, avec le moyen de conversion (CPUBS1, MEMBS1) et à l'aide des instructions de la fonction de conversion, les deuxièmes données brutes de taxes en deuxièmes données de facturation de taxes pouvant être enregistrées par l'ordinateur de facturation de taxes (BC) et **en ce que** le module de programme présente au moins une fonction d'émission conçue de telle sorte que l'ordinateur de taxes (BS1) puisse transmettre, avec le moyen d'émission (TRBS1) et à l'aide des instructions de la fonction d'émission, les deuxièmes données de facturation de taxe à l'ordinateur de facturation de taxes (BC).

15. Module de programme pour un ordinateur de facturation de taxes (BC) destiné au traitement de données de taxes pour des services de télécommunication dans lequel le module de programme contient un code de programme pouvant être exécuté par un processeur (CPUBC) de l'ordinateur de facturation de taxes (BC), dans lequel l'ordinateur de facturation de taxes (BC) présente des moyens de réception (TRBC) pour la réception de premières données brutes de facturation de taxes qui proviennent d'au moins un premier ordinateur de taxes (BS1, BS2) et que l'ordinateur de taxes (BS1, BS2) constitue à partir des premières données brutes de taxes concernant des services de télécommunication et transmises par un premier central téléphonique (SW1),
**caractérisé en ce que** le module de programme présente au moins une fonction de réception conçue de telle sorte que l'ordinateur de facturation de taxes (BC) puisse recevoir, avec le moyen de réception (TRBC) et à l'aide des instructions de la fonction de réception, au moins des deuxièmes données de facturation de taxes qui proviennent d'au moins l'un des ordinateurs de taxes (BS1, BS2) et que l'ordinateur de taxes (BS1, BS2) constitue à partir des données brutes de taxes concernant des services de télécommunication et transmises par un deuxième central téléphonique (SW2) et **en ce que** le module de programme présente au moins une fonction d'affectation conçue de telle sorte que l'ordinateur de facturation de taxes (BC) affecte les premières données de facturation de taxes au premier central téléphonique (SW1) et les deuxièmes données de facturation de taxes au deuxième central téléphonique (SW2).
